# EUROPEAN PATENT SPECIFICATION

(11) **EP 1 621 955 B1**
(45) Date of publication and mention of the grant of the patent: **07.06.2017**
(21) Application number: 04103695.5
(22) Date of filing: 30.07.2004
(51) Int. Cl.: G06F 21/10

(54) **Method and device for providing access to encrypted content**
Verfahren und Vorrichtung zum Zugriff auf einen verschlüsselten Inhalt
Méthode et dispositif d'accès à un contenu crypté

(43) Date of publication of application: 01.02.2006
(73) Proprietor: Irdeto B.V., 2132 LS Hoofddorp (NL)
(72) Inventor: WAJS, Andrew Augustine, 2023 AA, HAARLEM (NL)
(74) Representative: Boult Wade Tennant

(56) References cited:
- EP-A- 1 372 055
- US-A- 5 260 999
- US-A1- 2004 044 779
- OPEN MOBILE ALLIANCE: "DRM Architecture, Candidate Version 2.0" ,, [Online] 15 July 2004 (2004-07-15), pages 1-24, XP002310145 Retrieved from the Internet: URL:http://www.openmobilealliance.org/rele ase_program/docs/DRM/V2_0-20040715-C/OMA-D RM-ARCH-V2_0-20040715-C.pdf> [retrieved on 2005-02]
- OPEN MOBILE ALLIANCE: "DRM Content Format V2.0 - Draft version 2.0" ,, [Online] 20 April 2004 (2004-04-20), XP002320016 Retrieved from the Internet: URL:xml.coverpages.org/OMADRM-DCFv202-2004 0420.pdf> [retrieved on 2005-02]

## Description

The invention relates to a method of providing access to encrypted content to one of a plurality of consumer systems, each consumer system being able to obtain a secure content package, including the encrypted content and an indication of a location from which to request a rights data object, and further including at least one device having access to a thus obtained secure content package and provided with an agent function enabling it to retrieve a rights data object from a device issuing rights data objects from the indicated location and for providing access to at least part of the encrypted content, the rights data object including at least content key information enabling decryption of at least part of the encrypted content and being cryptographically bound to at least the device to which it is issued, such that only devices with an agent function to which the rights data object has been bound are able to obtain the content key information.

The invention also relates to a data processing device for incorporation into one of a plurality of consumer systems, each consumer system being able to obtain a secure content package, including the encrypted content and an indication of a location from which to request a rights data object, and further including at least one device having access to a thus obtained secure content package and provided with an agent function enabling it to retrieve a rights data object from a device issuing rights data objects from the indicated location and for providing access to at least part of the encrypted content, the rights data object including at least content key information enabling decryption of at least part of the encrypted content and being cryptographically bound to at least the device to which it is issued, such that only devices with an agent function to which the rights data object has been bound are able to obtain the content key information, which data processing device includes a protected environment.

The invention also relates to a computer program product.

The invention also relates to a method of providing a secure content data package, including encrypted content data, for use by one of a plurality of consumer systems, each consumer system including at least an interface for obtaining the secure content data package from an external source, and further including at least one device having access to a thus obtained secure content data package and provided with an agent function enabling it to retrieve a rights data object from a device issuing rights data objects from an indicated location and for providing access to at least part of the encrypted content, the rights data object including at least content key information enabling decryption of at least part of the encrypted content data and being cryptographically bound to at least the device to which it is issued, such that only devices with an agent function to which the rights data object has been bound are able to obtain the content key information, wherein resource indicator data is provided with the encrypted content data, indicative of a location from which a device functioning as the rights issuer is issuing rights data objects.

The invention also relates to a server for providing a secure content data package, including encrypted content data, for use by one of a plurality of consumer systems, wherein the server includes a network interface to a communications network and each consumer system includes at least an interface for obtaining the secure content data package via the communications network, and further includes at least one device having access to a thus obtained secure content data package and provided with an agent function enabling it to retrieve a rights data object from a device issuing rights data objects from an indicated location and for providing access to at least part of the encrypted content, the rights data object including at least content key information enabling decryption of at least part of the encrypted content data and being cryptographically bound to at least the device to which it is issued, such that only devices with an agent function to which the rights data object has been bound are able to obtain the content key information, wherein the server is configured to provide to the one consumer system resource indicator data with the encrypted content data, indicative of a location from which a device functioning as the rights issuer is issuing rights data objects.

The invention also relates to a signal carrying a secure content data package, including encrypted content data, for use by a consumer system including at least an interface for obtaining the secure content data package from an external source, and further including at least one device having access to a thus obtained secure content data package and provided with an agent function enabling it to retrieve a rights data object from a device issuing rights data objects from an indicated location and for providing access to at least part of the encrypted content, the rights data object including at least content key information enabling decryption of at least part of the encrypted content data and being cryptographically bound to at least the device to which it is issued, such that only devices with an agent function to which the rights data object has been bound are able to obtain the content key information, wherein the secure content data package includes resource indicator data, indicative of a location from which a device functioning as the rights issuer is issuing rights data objects.

The invention also relates to a further computer program.

Respective examples of such methods, a data processing device and computer program are known from OPEN MOBILE ALLIANCE: "DRM Architecture, Candidate Version 2.0", 15 July 2004, pages 1-24, and "OMA DRM Architecture, Draft Version 2.0", Open Mobile Alliance Ltd., March 15, 2004. These documents describe mechanisms for secure authentication of trusted DRM (Digital Rights Management) agents and for secure packaging and transfer of usage rights and DRM Content to trusted DRM agent. Content is packaged in a secure content container (DCF). DRM Content is encrypted with a symmetric content encryption key (CEK). A DRM agent embodies a trusted environment within which DRM Content can be securely consumed. Its role is to enforce permissions and constraints and to control access to DRM Content. All DRM Agents have a unique private/public key pair and a certificate. A Rights Object is a document expressing the permissions and constraints associated with the content. The Rights Object also contains the CEK. Before delivering the Rights Object, sensitive parts are encrypted and the Rights Object is then cryptographically bound to the target DRM Agent. The Rights Object and DCF can then be delivered using any transport mechanism (e.g. HTTP/WSP, WAP Push, MMS). One model for content distribution is using an Over-The-Air download mechanism. The client initiates a browsing session with the Content Portal. The client downloads the DRM Content from the portal to local storage. The client looks up a Rights Issuer URL (Universal Resource Locator) within the DRM Content headers and initiates a connection to the Rights Issuer portal. It engages in the Rights Object Acquisition Protocol. The client, at the successful completion of this protocol acquires the Rights Object associated with the DRM Content.

US-A-5260999 discloses a distributed computer system that employs a license management system to account for software product usage.A problem of the known scheme is that it does not scale well to allow access rights to be provided to larger numbers of clients within a relatively small time interval. Each will look up the Rights Issuer URL and attempt to access the same Rights Issuer portal over the network at the same time, leading to congestion avoidable only by using a network and portal with a large capacity.

It is an object of the present invention to provide methods, a data processing device and computer program of the types mentioned above, to implement a Digital Rights Management infrastructure that scales relatively well with increasing numbers of consumer systems.

This object is achieved by means of the method of providing access to encrypted content to one of a plurality of consumer systems according to the invention, which is characterised by transferring a rights issuer module to a protected environment of a device for incorporation in the one consumer system, enabling the device, when operational in the consumer system, to generate at least one rights data object cryptographically bound to a requesting one of the devices in the consumer system provided with an agent function.

The term cryptographically bound is used herein to indicate that the rights data object has been subjected to a cryptographic operation making it accessible only to the devices to which it has been bound. A protected environment is an environment that has been made resistant to tampering by hardware or software measures, or a combination of the two.

Because the rights issuer module is transferred to a protected environment of a device for incorporation in the one consumer system, the devices with an agent function in that system can obtain rights data objects through a path in the consumer system that is independent of any links accessible to the other consumer systems. Thus, less use is made of the bandwidth provided by such links. The invention has the advantage that it becomes feasible to split content into many smaller sections, each requiring a different content key, because the requests to the rights issuer module are not transmitted over a public network. It has the further advantage that detailed knowledge of the configuration of each of the consumer systems need not be maintained centrally. Secret information for cryptographically binding rights data objects to requesting devices with an agent function is kept locally.

In a preferred embodiment, wherein the one consumer system includes an interface to an external communication network and wherein the consumer system is arranged to transfer data received through the interface to the device with the protected environment, the rights issuer module is transferred via the communication network.

The effect is to be able to update devices in consumer systems that have already been issued with newly developed rights issuer modules. This can be used to provide access to content data from another provider, to remedy or prevent the possibility of reverse analysis of rights issuer modules, etc.

In a preferred embodiment, the rights issuer module is transferred to a portable secure data processing device having an interface to a device in the consumer system.

The effect of this is that the rights issuer module is issued to a particular user, rather than a particular consumer system. This allows the user to access the encrypted content using another consumer system, by transferring the portable secure data processing device to another consumer system with a device adapted to exchange data through the interface of the portable secure data processing device. It also allows for changes to the configuration of the one consumer system.

In a preferred embodiment, the rights issuer module is transferred to a portable secure device having an interface to a cellular telephone handset, preferably a Subscriber Identity Module Card.

This embodiment has the advantage that efficient use is made of a ubiquitous infrastructure with all the components necessary to implement decentralised issuing of rights data objects. As information relating to the telephone subscription must be kept in a secure environment, cellular telephones generally already comprise a protected environment, to which the rights issuer module can be transferred. Furthermore, the telephone handset is frequently used to download and render content data, as well as to communicate it to further devices in the consumer system. The invention finds advantageous application in providing limited access to, for example, ring tones, screen images, games, etc.

A preferred embodiment includes transferring further respective rights issuer modules to protected environments of further devices for incorporation in respective further consumer systems, each rights issuer module enabling the device to which it is transferred, when operational in one of the further consumer systems, to generate at least one rights data object cryptographically bound to a requesting one of the devices in the consumer system provided with an agent function.

This embodiment allows content data to be played out to large numbers of consumer systems without having to use a large amount of bandwidth to provide them with rights data objects. It further allows a finer differentiation between consumer systems in respect of the types of access rights each is granted.

In a preferred embodiment, wherein each device with an agent function is configured, when performing the agent function, to provide access to the encrypted content only in accordance with access rights included in the rights data object, the method includes transferring a rights issuer module enabling the device with the protected environment, when operational in the consumer system, to generate at least one rights data object, cryptographically bound to a requesting one of the devices in the consumer system provided with an agent function and including at least one access right.

A preferred variant includes receiving a set of access conditions applicable to the one consumer system and configuring the rights issuer module in such a manner that a combination of access rights included in a set of one or more rights data objects issued to requesting devices in the one consumer system provided with an agent function complies with the set of access conditions applicable to the one consumer system.

The step of configuring the rights issuer module is carried out either before or after the rights issuer module is transferred. The effect of this embodiment is that access rights may be defined centrally for the complete consumer system, rather than for each device with an agent function in the consumer system. Thus, account is taken of the fact that a user may have a consumer system with several devices with an agent function. The choice of which device to use to access the content data is left to the user.

According to another aspect of the invention, the data processing device according to the invention is characterised in that
the data processing device further includes a rights issuer module, configured to run in the protected environment, and enabling the data processing device, when incorporated and operational in the consumer system, to generate at least one rights data object cryptographically bound to a requesting one of the devices in the consumer system provided with an agent function.

The data processing device makes a source of rights data objects accessible independently of any network shared with other consumer systems. Thus, bandwidth constraints on such networks are avoided.

According to another aspect, the invention provides a computer program arranged, when loaded into a data processing device including a protected environment, to enable the data processing device to function as a data processing device according to the invention.

According to another aspect of the invention, the method of providing a secure content data package, including encrypted content data, for use by one of a plurality of consumer systems, is characterised by providing resource indicator data pointing to a location within the one consumer system.

This method has the advantage of limiting use of the interface by pointing to a location within the one consumer system to which requests for rights data objects may be directed.

According to another aspect of the invention, the server according to the invention is characterised in that the server is configured to provide with the encrypted content data resource indicator data pointing to a location within the one consumer system.

The server has the advantage that it is configured to make economical use of the communications network.

According to another aspect of the invention, the signal according to the invention is characterised in that the secure content data package further includes resource indicator data representative of a data path to a location within the consumer system.

According to another aspect, the invention provides a computer program arranged, when loaded into a data processing device, to enable the data processing device to execute a method of providing a secure content data package according to the invention.

The invention will now be explained in further detail with reference to the accompanying drawings, in which:
Fig. 1 shows in schematic form a system for providing secure content packages and rights data objects providing access to these to a plurality of consumer systems;
Fig. 2 shows in schematic form a first type of secure content package including encrypted content data;
Fig. 3 shows in schematic form a second type of secure content package including encrypted content data; and
Fig. 4 gives a schematic overview of a cellular telephone handset in one or more of the consumer systems.

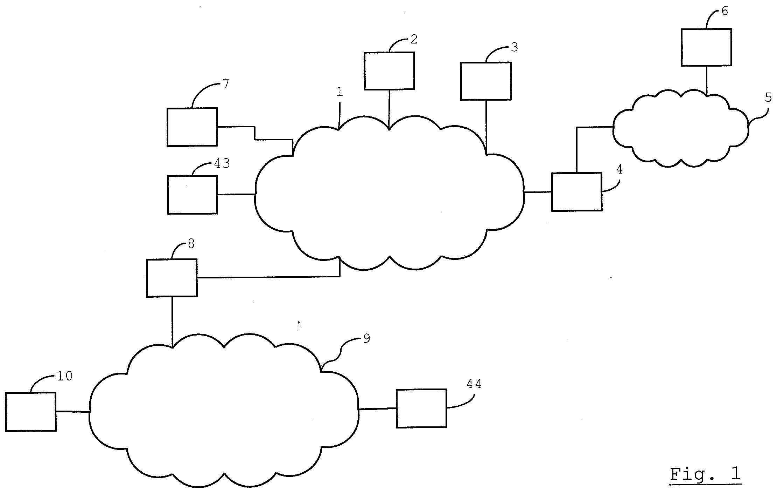

In Fig. 1, encrypted content is provided to consumer systems via a cellular network 1. The cellular network may be a CDMA, GSM, GPRS or UMTS network, for example. Accordingly, a first consumer system is formed by a first cellular phone 2 and a second consumer system by a second cellular phone 3. A third consumer system is formed by a combination of a third cellular phone 4, a home network 5 and a personal computer 6.

As an alternative to providing the encrypted content to the third consumer system via the cellular network 1, it could be provided in a broadcast, multicast or unicast mode via a cable or satellite network (not shown) to the personal computer 5, or on a data carrier, such as a CD or DVD. The fact that the consumer systems are defined as being able to obtain the encrypted content does not preclude a scheme wherein the encrypted content is pre-loaded into one or more of the first, second and third cellular phones 2-4, but not yet accessible.

Examples of content include ring tones, screen savers or background themes, and games for use on the cellular phones 2-4. Depending on the type of cellular network 1, the content may include compressed audio or video files. MP3-files are examples of the former category; MPEG-2, H.264/AVC are standards defining examples of the latter category.

Secure content packages including at least one section of encrypted content are provided from a first content server 7, accessible via a gateway 8 connecting the cellular network 1 to (at least part of) the Internet 9. Alternatively, content such as ring tones may be downloaded from a second content server 10 directly via the cellular network 1.

In the following, an implementation will be detailed in which the secure content packages available to the consumer systems comply substantially with Open Mobile Alliance specifications, in particular version 2 of the Digital Rights Management (DRM) specifications belonging thereto. An alternative standard for implementing Digital Rights Management could be used.

"OMA DRM Content Format V2.0, Draft Version 2.0", Open Mobile Alliance Ltd., April 20, 2004, defines two file structures that are preferably used. Reference is made to that publication for precise details.

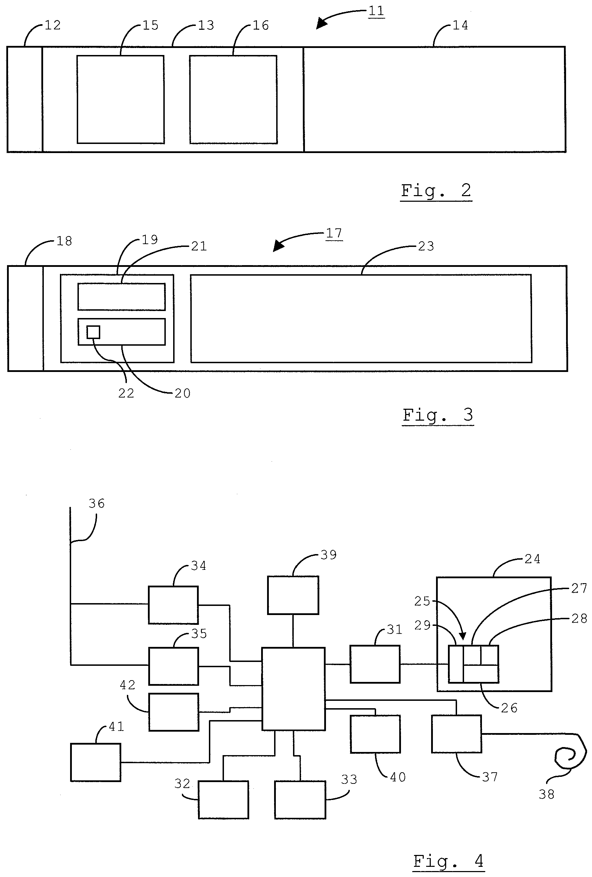

Fig. 2 shows the format of a Discrete Media Profile (DCF) file 11. It includes a file header 12, which identifies the type and version of the file 11. The file header 12 is followed by a first data structure, referred to as a first DRM container 13. In this example, it includes a second DRM container 14. The first DRM container 13 includes a common headers box 15 and a content object container 16. The content object container 16 includes a first section of encrypted content data. A similar structure in the second DRM container 14 carries a second section of encrypted content data, preceded by a second common headers box (not shown). Thus, the first DRM container 13 links the common headers box 15 to the content object container 136

The common headers box 15 includes at least a field containing a globally unique identifier. The value is unique to the encrypted section of content data included in the content object container 16. It will be referred to herein as the event_ID.

The common headers box 15 further includes a Universal Resource Locator (URL), which indicates a location from which a rights data object may be requested that includes content key information for decrypting at least part of the encrypted section of content data in the content object container 13. Thus, as part of a method of providing a secure content data package including encrypted content data, for use by one of a plurality of consumer systems, resource indicator data is provided with the encrypted content data. The resource data provided is indicative of a location from which a device functioning as the rights issuer is issuing rights data objects. Consequently, the first and second content servers 7,10 are configured to provide to the one consumer system resource indicator data with the encrypted content data.

Fig. 3 shows the format of a Continuous Packetised Media Profile (PDCF) file 17, which is targeted for media content like audio and video. It is a file structure intended to facilitate the streaming of the secure content package to one of the cellular phones 2-4. The PDCF file 17 starts with a file header 18, which identifies the type and version of the PDCF file 17. The PDCF file 17 further includes a movie box 19, which includes a first track box 20 and at least one further track box 21. The first track box 20 includes a protection scheme box 22. In the example, a section of a first track of content data is encrypted and included as packets in a media data box 23. Packets belonging to a section of at least one further track of content data are included in the clear in the same media data box 23. A header in each packet identifies the track to which the packet belongs, and links the packet to one of the first and further track boxes 20,21. At least one common headers box (not shown) is included in the movie box 19. There is either one applicable to all tracks or one in the first track box 20, applicable only to the encrypted section of the first track of content. Thus, the PDCF file 17 is structured to have a header containing the event_ID unique to the encrypted section of content data.

The section of encrypted content could be packaged in some other way, for example as a section of an MPEG-2 Packetised Elementary Stream, linked to a structure similar to the common headers box 15 via the elementary stream identifier, or the packet identifier of an MPEG-2 transport stream carrying the packetised elementary stream. In each case, the encrypted section of content data is provided with the event_ID unique to it.

Fig. 4 is a schematic diagram showing some relevant components of the third cellular phone 4. The cellular phone forms a terminal including a handset and a portable secure data processing device in the shape of a Subsciber Identity Module (SIM) card 24. The SIM card includes an integrated circuit (IC) 25, embedded in the SIM card 24, and preferably packaged in a tamper-proof manner. Mechanisms for packaging the IC 25 in such a manner are known in the art. The IC 25 includes a processor 26, Electronically Erasable and Programmable Read-Only-Memory (EEPROM) 27, main memory 28, and part of an interface 29 to the handset, which interface further includes contact pads co-operating with contacts in the handset. Further security features for making the SIM card 24 secure include cryptographic and/or code obfuscation techniques, which are known *per se*. Thus, the IC 25 provides a protected environment for running applications critical to the security of the overall DRM scheme.

The handset includes a handset controller 30, linked to an interface 31 to the SIM card 24, arranged to interact with the interface 29 of the latter to the handset. For voice telephony, the handset includes an audio input stage 32 and audio output stage 33, the former digitising the user's speech, the latter providing output to a loudspeaker. A modulator 34, demodulator 35 and first antenna 36 form an interface to the cellular network 1. A wireless communications controller 37 and second antenna 38 form an interface to the home network 5. The handset further includes handset Random Access Memory (RAM) 39 and handset EEPROM 40, as well as a keypad 41 and display driver 42.

Software code stored in handset EEPROM 40 provides it with an agent function, enabling it to access the encrypted content data using information in a rights data object. The handset further has a unique private/public key pair and a certificate enabling authentication of the handset.

In one embodiment, the handset obtains the secure content package from the first content server 7, for example as an MMS message. In another embodiment, the handset includes a browser for browsing the Internet 9, and obtains the secure content package from the second content server 10. In a further embodiment the secure content package is factory-installed on the EEPROM 27 of the SIM card 24 or handset EEPROM 40. The secure content package may also be obtained through the interface to the home network 5.

When acting as agent, the handset retrieves the event_ID and URL received with the encrypted content data, upon being triggered to access the encrypted content data. It formulates a request message to a device with a rights issuer module installed. The URL is parsed to obtain the address to which to send the request. The request itself may also be in the form of a URL, as is known in the art. The request includes at least the event_ID linked to the section of encrypted content data to which access is desired.

In response, and subject to criteria for granting access being fulfilled, the handset receives a rights data object from the device with the installed rights issuer module. The rights data object includes a key for decrypting the section of encrypted content data uniquely associated with the event_ID.

The rights data object preferably further includes data representative of access rights, in the form of a set of permissions and constraints. Permissions define the types of access permitted, such as copying, communicating to other devices, rendering, etc. Constraints qualify the permissions, for example by defining the number of times access of the defined type may be provided. Each device with agent functionality is regarded as a trusted entity. The program code providing the handset with agent functionality configures it to provide access to the encrypted content only in accordance with the access rights defined in the rights data object. This sets out the DRM scheme presented herein from a generic conditional access scheme, making it particularly suited for broadcasting content to a consumer system including a home network 5, as will be explained below. To ensure enforcement of the access rights, the program code providing the handset with agent functionality is preferably also tamper-proofed, using one or more of the techniques described above in convection with the IC 25 on the SIM card 24. Some or all of the agent functionality may be in the SIM card 24.

The rights issuer module is configured such that issued rights data objects are cryptographically bound to at least the handset with the agent functionality. Preferably, at least the key information in the rights data object is encrypted under a public key forming a key pair with a private key of the handset. It is noted that the rights data object may be cryptographically bound to a plurality of devices with agent functionality forming a defined domain within one consumer system, so that the rights data object can be transferred to the personal computer 6 and used by the latter to provide access to the encrypted content data, provided the personal computer also includes an agent function and has the right certificate and/or cryptographic keys. Some or all of the agent functionality may be in a smart card co-operating with the computer.

In a first embodiment, the rights issuer module has been transferred to the EEPROM 27 of the SIM card 24 prior to its incorporation into the third cellular phone 4. When operational, the rights issuer module, which is preferably a computer program module executable by the processor 26, enables the SIM card 24 to generate rights data objects cryptographically bound to the handset, or to any other device with agent functionality that is a node in the home network 5.

In a second embodiment, the rights issuer module is transferred to the SIM card 24 subsequent to its installation in the third cellular phone 4. As an example, first DRM server 43 is arranged to transfer a rights issuer module for issuing rights data objects related to encrypted content provided from the first content source 7. A second DRM server 44 is arranged to transfer a rights issuer module for issuing rights data objects related to encrypted content provided from the second content source 10.

A third embodiment is conceivable in the consumer system including the third cellular phone 4, in which the rights issuer module is pre-installed or transferred, to a smart card (not shown) for incorporation into the consumer system by insertion into a smart card reader (not shown) attached to the personal computer 6. A further alternative is to download the rights issuer module to a trusted platform module fixedly installed in either the handset or the personal computer 6.

Preferably, further respective rights issuer modules are transferred to SIM cards in the first and second cellular phones 2,3. They each enable the respective SIM cards to generate rights data objects cryptographically bound to the handsets in which the SIM cards are incorporated. The effect is that no use need be made of the cellular network 1 to obtain rights data objects. The effect is most pronounced when the encrypted content data is broadcast, since the broadcast is relatively efficient in terms of bandwidth usage, and congestion due to myriads of cellular phones trying to obtain rights data objects at the same time is avoided.

As mentioned, the rights issuer module is configured to issue rights data objects including at least one access right. Preferably, the entity providing the rights issuer modules receives a set of access conditions applicable to the or each consumer system. It configures the rights issuer module transferred to the SIM card 24 in the third cellular phone 4 in such a manner that a combination of access rights included in all rights data objects issued to the handset and the personal computer 6, and any other device with agent functionality attached to the home network 5, complies with the set of access conditions applicable to the one consumer system formed by these devices. Thus, for example, the encrypted content may have as access condition that each consumer system may make only five copies. The rights issuer module in the SIM card 24 is then configured to issue five rights data objects, each defining the right to copy once.

In a first variant, the set of access conditions applicable to the consumer system are coded into the rights issuer module transferred to the SIM card 24. In another embodiment, the rights issuer module is configured by means of a separate communication over the cellular network 1 to a SIM card 24 with a previously installed rights issuer module, in effect re-configuring that rights issuer module.

It is noted that the entity generating either the DCF file 11 or the PDCF file 17 provides therein a URL pointing to a location within the consumer system receiving the secure content data package. Also, the signal provided from the first and/or second content server 7,10 includes data resource indicator data pointing to a location within the one consumer system to which the content data is provided. The URL may be in a generic form, i.e. representative of a data path to a location within a consumer system, but not necessarily only meaningful in the context of one particular consumer system. That is to say that is may take the form of an instruction to a receiving handset to request a rights data object from any installed SIM card 24, not necessarily one with a particular serial number.

The description will now focus in more detail on the preferred functionality of the rights issuer module and agent functionality, as well as going into a particular type of secure content package.

Especially where the content data to be provided consists of a broadcast program or video to be provided on demand, it is desirable to separate the complete set of content data to be transferred into multiple sections, which will also be termed events in the present description. By encrypting each section separately, so that it can be decrypted only under its own content key, a key cycling scheme is implemented. A higher degree of protection is obtained by separating the complete set of content data into smaller separate events.

Because the rights issuer module is arranged to issue rights data objects for events including at least part of the content decryption key, or event key, it must have access to the key information. To avoid having to transfer large amounts of key information from the first and second content servers 7,10 to the SIM card 24, the keys for events are a function of event information uniquely associated with the event and provided by the first or second content server 7,10.

In a first variant, the event_ID is used to carry event information uniquely associated with the event and used as input to the cryptographic function that the rights issuer module executes to re-generate an event key.

In a second variant, the agent functionality enables the handset to derive a certificate from the content data belonging to the event. Preferably, the certificate is in an encrypted form. The SIM card 24 receives the certificate, decrypts it, and obtains event information unique to the event. At least a part is used to generate key information enabling the handset to decrypt the event, possibly after further processing of the key information. In this embodiment, it is preferred that the certificate is encrypted under a public key of the SIM card 24. Thus, the content provider can tie access rights to a particular SIM card 24, and thus to a particular subscriber, rather than to a particular handset.

The certificate may also be included in the event_ID, in the sense that a decryption operation must be carried out on at least part of the event_ID to obtain event information usable as input to the cryptographic operation that finally provides the event key information.

To provide security to counter any analysis of the cryptographic function used to generate the event key information, the event key information is generated using a cryptographic function that combines at least a part of key information loaded by the rights issuer module with at least a part of the event information. Preferably, such group key information is uploaded to the SIM card 24 from one of the first and second content servers 7,10 or the first and second DRM servers 43,44. Alternatively, the SIM card 24 could be pre-loaded with the group keys. One or more group keys may be part of the rights issuer modules transferred to the SIM card 24. It is noted that group keys need be refreshed less frequently due to the fact that both they and the event information unique to an event are used as input to the cryptographic function that provides the event key information for the event.

A group key is preferably applicable to several events, for example all events, i.e. sections of content data into which a larger unit of content data, such as a movie, has been divided. A group key may also, or alternatively, be applicable to a set of one or more consumer systems, with the total population of consumer systems being partitioned into multiple sets several times. Upon determining that a particular one of the devices issuing rights data objects has been compromised, use of the group keys applicable to sets including that device is discontinued. Thus, a compromised SIM card 24 can be revoked.

In one embodiment, a group key hierarchy may be implemented, wherein each group key at a highest level is associated with one of multiple sets of events and/or consumer systems and each group key at a lower level associated with one of multiples sub-sets of one of the sets. In such a scenario, group keys at different levels are preferably changed at different frequencies.

The scheme presented herein allows for implementation of several payment models.

In an embodiment, a rights issuer module configures the SIM card 24, to store data identifying the event with which the event information provided to it by the handset is uniquely associated in a log in the EEPROM 27. Preferably, but not necessarily, this data is stored with data representative of an entity associated with the device including the agent function, e.g its owner. Storage of event identification data allows collected license fees to be distributed fairly to the providers of the content data, in accordance with the amount of use made of content data provided by them.

The SIM card 24 receives a message from a system associated with a provider of content data and returns at least one message representative of at least part of the data stored in the log. This is, of course, preferably done through the intermediary of the handset, in response to a query from one of the first and second content servers 7,10 or first and second DRM servers 43,44.

The rights issuer module, when operative in the SIM card 24, loads and stores into EEPROM 27 data representative of a credit level accorded to an entity. The entity is, naturally, preferably the user of the SIM card 24, i.e. user of the consumer system including one of the cellular phones 2-4. The stored data is modified to reflect a lower credit level every time a rights data object is provided to a device with the agent function.

In a first variant, the credit level is lowered by a standard amount with each issued rights data object. Thus, each request to issue a rights data object represents a single unit of credit stored in a purse in the SIM card 24.

In a second variant, the agent function allows the device on which it is provided to derive a certificate from data provided with the encrypted content data forming the event. The rights issuer module in the SIM card 24 receives the certificate from the device providing the request for a rights data object. The certificate incorporates data reflecting the event cost. The content provider or entity associating limited access rights, or license conditions, to an event, generates the certificate, in accordance with the amount it wishes to charge for access to the event. The certificate may be included in similar fashion to the certificate providing event information used to generate the key for decrypting the event. Indeed, it may be the same certificate. The data representative of the unique event information, more particularly the event_ID itself, may allow extraction of such a certificate. Thus a particular value or set of values of event_ID provides an indication of the event cost.

It has been noted that an advantage of the Digital Rights Management scheme is that the rights issuer module is capable of generating a rights data object including at least one access right, preferably in accordance with license conditions derivable from data provided with the encrypted content and forwarded by the handset to the SIM card 24. The SIM card 24 receives the derived data determining the license conditions from the device with the agent function providing the request for a rights data object. It selects the access rights to be included in the rights data object in accordance with the received derived data.

Advantageously, the license conditions are also included in a certificate, such as the certificate reflecting the event cost. The license conditions themselves could comprise data reflecting the event cost. In that case, the SIM card 24 stores data linking each type of license condition to a certain event cost. Thus, the license condition allowing five copies would result in five deductions by an amount equal to the stored cost for copying. The certificate may carry a definition of available license types, each associated with a different cost. The SIM card 24, upon receiving the certificate, and optionally decrypting it, initiates an interaction with the user via the handset controller 30, keypad 41 and display driver 42 to select one of the available license types and to authorise appropriate decrementing of the credit level stored in the EEPROM 27.

As described above in relation to event costs, data determining license conditions can be incorporated in the event_ID. A particular component, value or range of values of the event_ID determines the license conditions and/or payment model. For example, "play-back once" may be in a first range, "play-back unlimited" in a second range of values. Thus, the content provider communicates at least some of the license conditions to the server that is the SIM card 24 by means of the event_ID.

It has been noted above that a key cycling scheme is especially desirable where the content data to be provided consists of a broadcast program or video to be provided on demand. To avoid interruptions in the decryption of consecutive sections of content data encrypted under different keys, and thus also identified by means of different event_IDs, it is preferred that decryption key information be available to the device with the agent functionality in advance of the event concerned. To this end, at least some of the encrypted sections of content data provided over the cellular network 1 are provided with two event_IDs: one identifying the event itself and one identifying a subsequently provided event.

The second event_ID may be in a Textual Headers field of the Common Headers Box carrying the first event_ID in the DCF file 11 or PDCF file 17. Thus, the first and second event_ID are provided substantially simultaneously. This is the case because the first and second content server 7,10 would create a serial data stream on the basis of such a file, when streaming content to one of the cellular phones 2-4. In such a data stream, the first event_ID is followed by the second event_ID before any event follows. In the DCF file 11, the first DRM Container 13 links the common headers box 15 to the content object container 16 carrying the first event. If the event with which the second event_ID is associated is carried in the second DRM Container 14, then the second event_ID is provided a second time in a common headers box 15 of the second DRM Container 14.

Similarly, where the PDCF file 17 forms the basis for streaming the content data to the cellular phones 2-4, access units or packets in the media data box 23 will be provided with a wrapper,i.e. encapsulated by data including a header and/or a trailer, that links them to a data structure with a field for the first event_ID and one for the second event_ID, so that they are similarly provided substantially simultaneously. The second event_ID is provided a second time when encrypted data belonging to the event to which it is uniquely associated is provided.

Software loaded into the handset provides it with the ability to execute an adapted decryption method. The handset receives from the first or second content provider 7,10 a first event with both the first event_ID and the second event_ID. It provides a request for a rights data object with the second event_ID, prior to receiving the second section of content data. Thus, it may obtain in advance the event key information for at least one event subsequent to the first event. To minimise communication across the interfaces 29,31, the first and second event_ID are provided in a single request to the SIM card 24 with the rights issuer module.

The handset controller 30 receives two decryption keys in one or more rights data objects from the SIM card 24. The first of these is used to decrypt the first event, and optionally a limited number of events received subsequently to receiving the first event. The second decryption key is stored in main memory 28 or EEPROM 27 for subsequent use.

As noted above, the second event_ID is received a second time. In response to receiving the second event_ID a second time, the handset retrieves the stored second content decryption key, and proceeds to decrypt at least the second event with that key.

Thus, the event_ID is used to trigger a key change in a key cycling scheme. In general, it need not be the event_ID uniquely associated with the second event that triggers the key change. The handset may be configured to react to a different event_ID, or different type of event_ID. For example, one digit or bit in the event_ID could signal a change from an odd to an even key, in a manner known in conventional Conditional Access schemes. Thus, it is possible to provide a third event in advance of the second event. The event_ID uniquely associated to the third event triggers the handset to change keys, but the change takes effect a pre-determined number of events subsequent to the third event.

The invention is not limited to the above-described embodiments, but may be varied within the scope of the claims. For example, the home network 5 may be wireless, in accordance with one of the Bluetooth, IEEE 802.11 or UWB standards. Alternatively, it may use optical links, for example in accordance with the IrDA standard, or it may be include wired USB or Ethernet connections. The digital rights issuer module may be placed in a smart card or secure hardware token as an alternative to the smart card 24.

Thus, the above description has disclosed a variety of techniques for Digital Rights Management, which may be freely combined in any way to implement a preferred scheme. The disclosed techniques are recapitulated herein below.

A method of providing rights data objects for issuing to a device having access to encrypted content belonging to one of a plurality of events and provided with an indication of a location from which the rights data object may be requested and event information uniquely associated with the event, which device includes an agent function for providing a request to a device issuing rights data objects from the indicated location and data representative of the event information, includes: receiving the request and data representative of the event information,
generating a rights data object, including event key information enabling the content data belonging to the event uniquely associated with the event information to be decrypted, and is characterised by
generating the event key information using a cryptographic function that operates on at least a part of the event information.

The method optionally includes loading key information from a provider of the encrypted content and generating the event key information using a cryptographic function that combines at least a part of the loaded key information with at least a part of the event information.

The method optionally includes storing data identifying the event with which the event information is uniquely associated in a log, and optionally includes receiving a message from a system associated with a provider of content data, and returning at least one message including information representative of at least part of the data stored in the log.

The method optionally includes loading and storing in a memory device data representative of a credit level accorded to an entity, and
modifying the stored data to reflect a lower credit level if the generated rights data object is provided to the device including the agent function. The agent function allows the device including it to derive a certificate from data provided with the encrypted content data, and the method optionally includes receiving a certificate incorporating data reflecting the event cost from the device providing the request and
modifying the stored data to reflect a credit level lower by an amount equal to the event cost.

A variant includes receiving a certificate incorporating the data in encrypted form and decrypting the data reflecting the event cost, preferably using a key forming a public/private key pair with a key under which the data has been encrypted.

When a certificate is received, the method optionally includes extracting the certificate from the received data representative of the event information.

The device including the agent function is configured, when performing the agent function, to provide access to encrypted content only in accordance with access rights included in a rights data object received by it. The method optionally includes
generating a rights data object further including at least one access right. The device including the agent function is configured, when performing the agent function, to derive data determining license conditions from data provided with the encrypted content. The method optionally includes receiving derived data determining license conditions from the device providing the request and
selecting the access right(s) included in the rights data object in accordance with the received derived data. The method optionally includes extracting the data determining the license conditions from the received data representative of the event information.

A system for providing rights data objects to a device having access to encrypted content belonging to one of a plurality of events and provided with an indication of a location from which the rights data object may be requested and event information uniquely associated with the event, which device includes an agent function for providing a request to a device issuing rights data objects from the indicated location and data representative of the event information, includes: a processor operating in a secure environment, and an interface for passing the request and data representative of the event information, to the processor, wherein the processor is configured to generate a rights data object, including event key information enabling the content data belonging to the event uniquely associated with the event information to be decrypted. The processor is further configured to generate the event key information using a cryptographic function that operates on at least a part of the event information.

The system is optionally configured to execute a method of providing rights data objects as recited above.

A computer program is arranged, when loaded into a programmable processing device, to enable the programmable processing device to execute a method of providing rights data objects as recited above.

A method of attaching limited access rights to content data belonging to one of a plurality of events, to allow use of the content data by at least a component of a consumer system including a device provided with an agent function, includes: providing at least part of the content data in encrypted form so as to be decryptable using event key information, providing therewith event information uniquely associated to the particular one of the events to which the content data belongs, and
providing therewith an indication of a location from which a rights data object including at least part of the event key information may be requested,
the agent function allowing the device on which it is provided to provide a request to a device issuing rights data objects from the indicated location, and data representative of the event information. The encrypted part of the content data is provided in a form allowing decryption using event key information that is a cryptographic function of at least part of the provided event information and in that the indicated location is that from which a server arranged to execute a method of providing rights data objects as recited above is configured to issue rights data objects.

Optionally, the method includes generating a data structure linking two identifiable data fields,
placing event identification information including an event code in a first field, and placing at least part of the encrypted content data in a second field, the device including the agent function being configured to include at least the event code in the request.

Optionally, the method includes providing data determining license conditions with the encrypted content, wherein the indicated location is that from which a server arranged to execute a method according to claim 9 or 10 is configured to issue rights data objects.

Optionally, at least some of the license conditions are communicated to the server by means of the event code.

A system for attaching limited access rights to content data belonging to one of a plurality of events, to allow use of the content data by at least a component of a consumer system including a device provided with an agent function, is configured to carry out a method of attaching limited access rights as recited above.

A computer program is arranged, when loaded into a programmable processing device, to enable the programmable processing device to execute a method of attaching limited access rights as recited above.

Also, a method of attaching limited access rights to content data, to allow use of the content data by at least a component of a consumer system including a device provided with an agent function, has been disclosed, which method includes: providing a first section of the content data in an encrypted form allowing decryption using a first content decryption key, providing a second section of the content data in an encrypted form allowing decryption using a second content decryption key, wherein the second section of content data is provided subsequent to the first section of content data, wherein the first section of content data is provided with first event identification data, uniquely identifying a section of content data, and at least the first section of content data is provided with an indication of a location from which a rights data object may be requested,
the agent function allowing the device on which it is provided to provide a request including data representative of event information provided with a section of content data to a device issuing from the indicated location rights data objects including at least part of a content decryption key for decrypting the section of content data identified by the data representative of event information in the request.

The method optionally includes providing second event identification data, uniquely identifying the second section of content data, together with the first section of content data.

In the method, the first and second event identification data are provided substantially simultaneously.

Data corresponding to the second event identification data are optionally provided a second time with the second section of content data.

Optionally, each section of content data is provided in a data structure linking two identifiable data fields, wherein the first and second event identification data are placed in a first field, and at least part of the first section of content data is placed in a second field.

The method optionally includes encrypting at least the second section of content data so as to allow decryption using a key that is a cryptographic function of at least part of the second event identification data.

A computer program is arranged, when loaded into a programmable processing device, to enable the programmable processing device to execute a method of attaching limited access rights to content data as recited above.

A signal carries serial data having a plurality of sections, wherein a first section includes
a first section of content data in an encrypted form allowing decryption using a first content decryption key and a second section of the serial data, subsequent to the first section of the serial data, includes a second section of content data in an encrypted form allowing decryption using a second content decryption key. The first section of the serial data stream further includes first event identification data, uniquely identifying a section of content data and an indication of a location from which a rights data object may be requested by a device provided with an agent function, allowing the device to provide a request including data representative of event information provided with a section of content data to a device issuing from the indicated location rights data objects including at least part of a content decryption key for decrypting the section of content data identified by the data representative of event information in the request. The first section of the serial data further includes second event identification data, uniquely identifying the second section of content data and separated by other data from the second section of the serial data.

In the signal, each section optionally includes at least one header and a body, wherein each section of content data is incorporated in the body and event identification data provided with the section of content data is linked to the section of content data by the header.

The second section of the serial data optionally further includes data representative of the second event identification data.

A server for providing content data to at least one consumer system is configured to carry out a method of attaching limited access rights to content data as recited above and/or to provide a signal as defined above.

A method of accessing content data associated with limited access rights, includes
receiving a first section of the content data in an encrypted form allowing decryption using a first content decryption key, together with first event identification data, uniquely identifying the first section of content data, and an indication of a location from which a rights data object may be requested, providing a request including data representative of the first event information provided with the first section of content data to a device issuing from the indicated location rights data objects including at least part of a content decryption key for decrypting the section of content data identified by the data representative of event information in the request, and receiving a second section of the content data in an encrypted form allowing decryption using a second content decryption key, wherein the second section of content data is provided subsequent to the first section of content data, and receiving the second event identification data, uniquely identifying the second section of content data, with the first section of content data, and
providing a request, including data representative of the second event identification data, to the device issuing rights objects, prior to receiving the second section of content data.

Optionally, the data representative of the first and second event identification data are provided in a single request to the device issuing rights data objects.

The method optionally includes receiving the first and second content decryption key in at least one rights data object, wherein the first content decryption key is used to decrypt at least the first section of content data, and the second content decryption key is stored for subsequent use.

The method optionally includes receiving a section of content data with event identification data uniquely identifying the section of content data, retrieving the stored second content decryption key in response to receiving the event identification data, and subsequently decrypting at least the second section of content data with the second content decryption key.

A system for accessing content data associated with limited access rights, includes
an interface for receiving a first section of the content data in an encrypted form allowing decryption using a first content decryption key, together with first event identification data, uniquely identifying the first section of content data, and an indication of a location from which a rights data object may be requested, and for receiving a second section of the content data subsequent to the first section of content data, in an encrypted form allowing decryption using a second content decryption key,
a processor arranged to generate a request including data representative of the first event information provided with the first section of content data, and
an interface for providing the request to a device issuing from the indicated location rights data objects including at least part of a content decryption key for decrypting the section of content data identified by the data representative of event information in the request. The system is configured to provide a request including data representative of second event identification data, to the device (24) issuing rights objects, prior to receiving the second section of content data, upon receiving with the first section of content data the second event identification data uniquely identifying the second section of content data.

The system is optionally configured to execute a method of accessing content data associated with limited access rights as defined above.

A computer program is arranged, when loaded into a programmable processing device, to enable the programmable processing device to execute a method of accessing content data associated with limited access rights.

## Claims

1. Method of providing access to encrypted content to a consumer system, the consumer system being one of a plurality of consumer systems (2-4,6), the consumer system including at least one device having access to a secure content package and being provided with an agent function enabling the at least one device to retrieve a rights data object, the method comprising:
obtaining the secure content package in the consumer system, the secure content package including the encrypted content and an indication of a location from which to request a rights data object;
retrieving in the at least one device the rights data object from a further device (24) issuing rights data objects from the indicated location, each rights data object being cryptographically bound to at least the device to which it is issued, such that only devices with an agent function to which the rights data object has been bound are able to obtain content key information, the rights data object including at least content key information;
enabling by the agent function the at least one device to provide access to at least part of the encrypted content;
providing access by the at least one device to the at least part of the encrypted content; and
decrypting the at least part of the encrypted content using the content key information,
**characterised by**:
transferring a rights issuer module to a protected environment (25) of the further device (24) for incorporation in the consumer system, thereby enabling the further device, when operational in the consumer system, to generate the rights data object cryptographically bound to the at least one device in the consumer system provided with the agent function.

2. Method according to claim 1, wherein the one consumer system includes an interface to an external communication network (1,9) and wherein the consumer system is arranged to transfer data received through the interface to the device with the protected environment, wherein the rights issuer module is transferred via the communication network.

3. Method according to claim 1 or 2, wherein the rights issuer module is transferred to a portable secure data processing device (24) having an interface (29) to a device in the consumer system.

4. Method according to claim 3, wherein the rights issuer module is transferred to a portable secure device having an interface (29) to a cellular telephone handset, preferably a Subscriber Identity Module Card.

5. Method according to any one of the preceding claims, including transferring further respective rights issuer modules to protected environments of further devices for incorporation in respective further consumer systems, each rights issuer module enabling the device to which it is transferred, when operational in one of the further consumer systems, to generate at least one rights data object cryptographically bound to a requesting one of the devices in the consumer system provided with an agent function.

6. Method according to any one of the preceding claims, wherein each device with an agent function is configured, when performing the agent function, to provide access to the encrypted content only in accordance with access rights included in the rights data object, which method includes transferring a rights issuer module enabling the device (24) with the protected environment (25), when operational in the consumer system, to generate at least one rights data object, cryptographically bound to a requesting one of the devices in the consumer system provided with an agent function and including at least one access right.

7. Method according to any one of the preceding claims, including
receiving a set of access conditions applicable to the one consumer system and
configuring the rights issuer module in such a manner that a combination of access rights included in a set of one or more rights data objects issued to requesting devices in the one consumer system provided with an agent function complies with the set of access conditions applicable to the one consumer system.

8. A consumer system, the consumer system being one of a plurality of consumer systems (2-4,6), the consumer system
including at least one device having access to a secure content package and being provided with an agent function enabling the at least one device to retrieve a rights data object, the consumer system being configured to obtain the secure content package including the encrypted content and an indication of a location from which to request a rights data object,
wherein the at least one device is configured to retrieve the rights data object from a further device (24) configured for issuing rights data objects from the indicated location, each rights data object being cryptographically bound to at least the device to which it is issued, such that only devices with an agent function to which the rights data object has been bound are able to obtain content key information,
wherein the agent function is configured to enable the at least one device to provide access to at least part of the encrypted content,
wherein the rights data object includes at least content key information enabling decryption of at least part of the encrypted content,
**characterised in that**
the further device includes a rights issuer module configured to run in a protected environment of the further device, wherein the rights issuer module is adapted to enable the further device, when incorporated and operational in the consumer system, to generate the rights data object cryptographically bound to the at least one device in the consumer system provided with the agent function.

9. Data processing device comprising a rights issuer module configured to run in a protected environment of the data processing device, wherein the rights issuer module is adapted to enable the data processing device, when incorporated and operational in a consumer system according to claim 8, to generate a rights data object cryptographically bound to at least one device in the consumer system provided with an agent function.

10. Computer program, which, when loaded into a data processing device (24) according to claim 9, functions as a rights issuer module configured to run in a protected environment of the data processing device, wherein the rights issuer module is adapted to enable the data processing device, when incorporated and operational in a consumer system according to claim 8, to generate a rights data object cryptographically bound to at least one device in the consumer system provided with an agent function.

## Patentansprüche

1. Verfahren für die Bereitstellung eines Zugriffs eines Consumer-Systems auf einen verschlüsselten Inhalt, wobei das Consumer-System ein System aus einer Vielzahl von Consumer-Systemen (2-4, 6) ist, wobei das Consumer-System zumindest eine Vorrichtung einschließt, welche Zugriff auf ein sicheres Inhaltspaket hat und mit einer Agentenfunktion ausgestattet ist, welche es der mindestens einen Vorrichtung ermöglicht, ein Rechte-Datenobjekt abzurufen, wobei das Verfahren die folgenden Schritte umfasst:
Erhalt des sicheren Inhaltspakets in dem Consumer-System, wobei das sichere Inhaltspaket den verschlüsselten Inhalt sowie eine Angabe eines Ortes umfasst, von welchem aus ein Rechte-Datenobjekt angefordert werden soll;
Abruf des Rechte-Datenobjekts in der mindestens einen Vorrichtung aus einer weiteren Vorrichtung (24), welche Rechte-Datenobjekte von dem angezeigten Ort ausgibt, wobei jedes Rechte-Datenobjekt kryptographisch an zumindest die Vorrichtung gebunden ist, an welche es ausgegeben wird, so dass nur Vorrichtungen mit einer Agentenfunktion, an welche das Rechte-Datenobjekt gebunden wurde, in der Lage sind, Inhalts-Schlüsselinformationen zu erhalten, wobei das Rechte-Datenobjekt zumindest Inhalts-Schlüsselinformationen umfasst;
Ermöglichung durch die Agentenfunktion, dass die mindestens eine Vorrichtung einen Zugriff auf zumindest einen Teil des verschlüsselten Inhalts bereitstellt;
Bereitstellung eines Zugriffs durch die mindestens eine Vorrichtung auf den zumindest Teil des verschlüsselten Inhalts; und
Entschlüsselung des zumindest Teils des verschlüsselten Inhalts unter Verwendung der Inhalts-Schlüsselinformationen,
**gekennzeichnet durch**:
Übergabe eines Rechte-Ausgabemoduls an eine geschützte Umgebung (25) der weiteren Vorrichtung (24) zur Aufnahme in dem Consumer-System, wodurch es der weiteren Vorrichtung bei Betrieb in dem Consumer-System möglich ist, das kryptographisch an die mindestens eine mit der Agentenfunktion ausgestatteten Vorrichtung in dem Consumer-System gebundene Rechte-Datenobjekt zu erzeugen.

2. Verfahren nach Anspruch 1, wobei das eine Consumer-System eine Schnittstelle mit einem externen Kommunikationsnetzwerk (1, 9) umfasst und wobei das Consumer-System so angeordnet ist, dass es durch die Schnittstelle empfangene Daten an die Vorrichtung mit der geschützten Umgebung übergibt, wobei das Rechte-Ausgabemodul über das Kommunikationsnetzwerk übergeben wird.

3. Verfahren nach Anspruch 1 oder 2, wobei das Rechte-Ausgabemodul an eine tragbare sichere Datenverarbeitungsvorrichtung (24) übergeben wird, welche eine Schnittstelle (29) mit einer Vorrichtung in dem Consumer-System aufweist.

4. Verfahren nach Anspruch 3, wobei das Rechte-Ausgabemodul an eine tragbare sichere Vorrichtung übergeben wird, welche eine Schnittstelle (29) mit einem Mobiltelefon, vorzugsweise mit einer SIM-Karte, aufweist.

5. Verfahren nach einem der vorhergehenden Ansprüche, welches die Übergabe weiterer jeweiliger Rechte-Ausgabemodule an geschützte Umgebungen weiterer Vorrichtungen zur Aufnahme in jeweiligen weiteren Consumer-Systemen einschließt, wobei jedes Rechte-Ausgabemodul es der Vorrichtung, an welche es übergeben wird, ermöglicht, bei Betrieb in einem der weiteren Consumer-Systeme zumindest ein Rechte-Datenobjekt zu erzeugen, das kryptographisch an eine mit der Agentenfunktion ausgestatteten anfragende Vorrichtung in dem Consumer-System gebunden ist.

6. Verfahren nach einem der vorhergehenden Ansprüche, wobei jede Vorrichtung mit einer Agentenfunktion konfiguriert wird, wenn die Agentenfunktion ausgeführt wird, um einen Zugriff auf den verschlüsselten Inhalt nur in Übereinstimmung mit in dem Rechte-Datenobjekt enthaltenen Zugriffsrechten bereitzustellen, wobei das Verfahren die Übergabe eines Rechte-Ausgabemoduls umfasst, welches es der Vorrichtung (24) mit der geschützten Umgebung (25) ermöglicht, bei Betrieb in dem Consumer-System zumindest ein Rechte-Datenobjekt zu erzeugen, das kryptographisch an eine mit einer Agentenfunktion ausgestatteten anfragende Vorrichtung der Vorrichtungen in dem Consumer-System gebunden ist, und mindestens ein Zugriffsrecht umfasst.

7. Verfahren nach einem der vorhergehenden Ansprüche, welches Folgendes umfasst:
Empfang einer Reihe von Zugriffsbedingungen, welche auf das Consumer-System anwendbar sind; und
Konfiguration des Rechte-Ausgabemoduls derart, dass eine Kombination von Zugriffsdaten, welche in einer Reihe von einem oder mehreren Rechte-Datenobjekten, welche an die mit einer Agentenfunktion ausgestatteten anfragende Vorrichtung in dem einen Consumer-System ausgegeben werden, enthalten ist, der Reihe von Zugriffsbedingungen, welche auf das eine Consumer-System anwendbar sind, entspricht.

8. Consumer-System, wobei das Consumer-System eines aus einer Vielzahl von Consumer-Systemen (2-4, 6) ist, wobei das Consumer-System mindestens eine Vorrichtung umfasst, welche Zugriff auf ein sicheres Inhaltspaket hat und mit einer Agentenfunktion ausgestattet ist, welche es der mindestens einen Vorrichtung ermöglicht, ein Rechte-Datenobjekt abzurufen, wobei das Consumer-System so konfiguriert ist, dass es das sichere Inhaltspaket erhält, das den verschlüsselten Inhalt und eine Angabe eines Orts beinhaltet, von dem aus ein Rechte-Datenobjekt angefordert werden soll,
wobei die mindestens eine Vorrichtung dazu konfiguriert ist, das Rechte-Datenobjekt von einer weiteren Vorrichtung (24) abzurufen, welche zur Ausgabe von Rechte-Datenobjekten von dem angezeigten Ort aus konfiguriert ist, wobei jedes Rechte-Datenobjekt kryptographisch zumindest an die Vorrichtung, an welche es ausgegeben wird, gebunden ist, so dass nur Vorrichtungen mit einer Agentenfunktion, an welche das Rechte-Datenobjekt gebunden wurde, in der Lage sind, Inhalts-Schlüsselinformationen zu erhalten,
wobei die Agentenfunktion so konfiguriert ist, dass sie es der mindestens einen Vorrichtung ermöglicht, einen Zugriff auf zumindest einen Teil des verschlüsselten Inhalts bereitzustellen,
wobei das Rechte-Datenobjekt zumindest Inhalts-Schlüsselinformationen umfasst, welche die Entschlüsselung zumindest eines Teils des verschlüsselten Inhalts ermöglichen,
**dadurch gekennzeichnet, dass**
die weitere Vorrichtung ein Rechte-Ausgabemodul umfasst, welches zum Laufen in einer geschützten Umgebung der weiteren Vorrichtung konfiguriert ist, wobei das Rechte-Ausgabemodul so angepasst ist, dass es der weiteren Vorrichtung bei Aufnahme und Betrieb in dem Consumer-System möglich ist, das Rechte-Datenobjekt zu erzeugen, das kryptographisch an die mindestens eine mit der Agentenfunktion ausgestatteten Vorrichtung in dem Consumer-System gebunden ist.

9. Datenverarbeitungsvorrichtung, welche ein Rechte-Ausgabemodul aufweist, welches zum Laufen in einer geschützten Umgebung der Datenverarbeitungsvorrichtung konfiguriert ist, wobei das Rechte-Ausgabemodul so angepasst ist, dass es der Datenverarbeitungsvorrichtung bei Aufnahme und Betrieb in einem Consumer-System nach Anspruch 8 möglich ist, ein Rechte-Datenobjekt zu erzeugen, das kryptographisch an die mindestens eine mit der Agentenfunktion ausgestatteten Vorrichtung in dem Consumer-System gebunden ist.

10. Computerprogramm, welches, wenn es in einer Datenverarbeitungsvorrichtung (24) nach Anspruch 9 hochgeladen ist, als ein Rechte-Ausgabemodul fungiert, das zum Laufen in einer geschützten Umgebung der Datenverarbeitungsvorrichtung konfiguriert ist, wobei das Rechte-Ausgabemodul so angepasst ist, dass es der Datenverarbeitungsvorrichtung bei Einbau und Betrieb in einem Consumer-System nach Anspruch 8 möglich ist, ein Rechte-Datenobjekt zu erzeugen, das kryptographisch an mindestens eine mit einer Agentenfunktion ausgestatteten Vorrichtung in dem Consumer-System gebunden ist.

## Revendications

1. Procédé pour fournir à un système grand public un accès à un contenu crypté, le système grand public étant l'un parmi une pluralité de systèmes grand public (2 à 4, 6), le système grand public comprenant au moins un dispositif ayant accès à un package de contenu sécurisé et étant muni d'une fonction d'agent permettant au moins un dispositif de récupérer un objet de données de droits, le procédé comprenant les étapes consistant à :
obtenir le package de contenu sécurisé dans le système grand public, le package de contenu sécurisé incluant le contenu crypté et une indication d'un emplacement à partir duquel demander un objet de données de droits ;
récupérer dans le au moins un dispositif l'objet de données de droits à partir d'un dispositif supplémentaire (24) émettant des objets de données de droits à partir de l'emplacement indiqué, chaque objet de données de droits étant lié de manière cryptographique au au moins un dispositif dans lequel il est émis, de sorte que seuls des dispositifs ayant une fonction d'agent auquel a été lié l'objet de données de droits sont capables d'obtenir des informations de clé de contenu, l'objet de données de droits comprenant au moins des informations de clé de contenu ;
permettre, par la fonction d'agent, au moins un dispositif de fournir un accès à au moins une partie du contenu crypté ;
fournir un accès par le au moins un dispositif à la au moins une partie du contenu crypté ; et
décrypter la au moins une partie du contenu crypté en utilisant les informations de clé de contenu,
**caractérisé par** l'étape consistant à :
transférer un module émetteur de droits à un environnement protégé (25) du dispositif supplémentaire (24) pour une incorporation dans le système grand public, permettant ainsi au dispositif supplémentaire, lorsqu'il est opérationnel dans le système grand public, de générer l'objet de données de droits de manière cryptographique lié au moins un dispositif du système grand public muni de la fonction d'agent.

2. Procédé selon la revendication 1, dans lequel le système grand public comprend une interface avec un réseau de communication externe (1, 9) et dans lequel le système grand public est conçu pour transférer des données reçues à travers l'interface dans le dispositif ayant l'environnement protégé, le module émetteur de droits étant transféré via le réseau de communication.

3. Procédé selon la revendication 1 ou 2, dans lequel le module émetteur de droits est transféré à un dispositif de traitement de données sécurisé portable (24) ayant une interface (29) avec un dispositif du système grand public.

4. Procédé selon la revendication 3, dans lequel le module émetteur de droits est transféré dans un dispositif sécurisé portable ayant une interface (29) avec un combiné téléphonique cellulaire, de préférence une carte SIM (Module D'identité de l'Abonné).

5. Procédé selon l'une quelconque des revendications précédentes, incluant le transfert de modules émetteurs de droits respectifs supplémentaires dans des environnements protégés de dispositifs supplémentaires pour une incorporation dans des systèmes grand public respectifs supplémentaires, chaque module émetteur de droits permettant au dispositif dans lequel il est transféré, lorsqu'il est opérationnel dans l'un des systèmes grand public supplémentaires, de générer au moins un objet de données de droits lié de manière cryptographique à un dispositif demandeur parmi les dispositifs du système grand public munis d'une fonction d'agent.

6. Procédé selon l'une quelconque des revendications précédentes, dans lequel chaque dispositif ayant une fonction d'agent est configuré, lors de l'exécution de la fonction d'agent, pour fournir un accès au contenu crypté conformément uniquement à des droits d'accès inclus dans l'objet de données de droits, lequel procédé Comprend le transfert d'un module émetteur de droits permettant au dispositif (24) ayant l'environnement protégé (25), lorsqu'il est opérationnel dans le système grand public, de générer au moins un objet de données de droits, lié de manière cryptographique à un dispositif demandeur parmi les dispositifs du système grand public munis d'une fonction d'agent et incluant au moins un droit d'accès.

7. Procédé selon l'une quelconque des revendications précédentes, comprenant
la réception d'un ensemble de conditions d'accès applicables au système grand public, et
la configuration du module émetteur de droits de telle manière qu'une combinaison de droits d'accès inclus dans un ensemble constitué d'un ou plusieurs objets de données de droits émis dans des dispositifs demandeurs du système grand public munis d'une fonction d'agent est conforme à l'ensemble des conditions d'accès applicables au système grand public.

8. Système grand public, le système grand public étant l'un parmi une pluralité de systèmes grand public (2 à 4, 6), le système grand public comprenant au moins un dispositif ayant accès à un package de contenu sécurisé et étant muni d'une fonction d'agent permettant au moins un dispositif de récupérer un objet de données de droits, le système grand public étant configuré pour obtenir le package de contenu sécurisé incluant le contenu crypté et une indication d'un emplacement à partir duquel demander un objet de données de droits,
dans lequel le au moins un dispositif est configuré pour récupérer l'objet de données de droits à partir d'un dispositif supplémentaire (24) configuré pour émettre des objets de données de droits à partir de l'emplacement indiqué, chaque objet de données de droits étant lié de manière cryptographique au moins un dispositif dans lequel il est émis, de sorte que seuls des dispositifs ayant une fonction d'agent auxquels a été lié l'objet de données de droits sont capables obtenir des informations de clé de contenu,
dans lequel la fonction d'agent est configurée pour permettre au moins un dispositif de fournir un accès à au moins une partie du contenu crypté,
dans lequel l'objet de données de droits comprend au moins des informations de clé de contenu permettant le décryptage d'au moins une partie du contenu crypté,
**caractérisé en ce que**
le dispositif supplémentaire comprend un module émetteur de droits configuré pour s'exécuter dans un environnement protégé du dispositif supplémentaire, dans lequel le module émetteur de droits est adapté pour permettre au dispositif supplémentaire, lorsqu'il est incorporé et opérationnel dans le système grand public, de générer l'objet de données de droits lié de manière cryptographique au moins un dispositif du système grand public muni de la fonction d'agent.

9. Dispositif de traitement de données comprenant un module émetteur de droits configuré pour s'exécuter dans un environnement protégé du dispositif de traitement de données, dans lequel le module émetteur de droits est adapté pour permettre au dispositif de traitement de données, lorsqu'il est incorporé et opérationnel dans un système grand public selon la revendication 8, de générer un objet de données de droits lié de manière cryptographique à au moins un dispositif du système grand public muni d'une fonction d'agent.

10. Programme informatique qui, lorsqu'il est chargé dans un dispositif de traitement de données (24) selon la revendication 9, fonctionne comme un module émetteur de droits configuré pour s'exécuter dans un environnement protégé du dispositif de traitement de données, dans lequel le module émetteur de droits est adapté pour permettre au dispositif de traitement de données, lorsqu'il est incorporé et opérationnel dans un système grand public selon la revendication 8, de générer un objet de données de droits lié de manière cryptographique à au moins un dispositif du système grand public muni d'une fonction d'agent.
